# EUROPÄISCHE PATENTANMELDUNG

(11) **EP 2 305 924 A2**
(43) Veröffentlichungstag der Anmeldung: **06.04.2011**
(21) Anmeldenummer: 10008046.4
(22) Anmeldetag: 02.08.2010
(51) Int. Cl.: E04H 15/62

(54) **Spannnagel**

(30) Priorität: 23.09.2009 DE 202009012782 U
(71) Anmelder: Girth, Klaus, 84489 Burghausen (DE)
(72) Erfinder: Girth, Klaus, 84489 Burghausen (DE)
(74) Vertreter: Gössmann, Christoph Tassilo

(57) **Zusammenfassung**

Spannnagel, dadurch gekennzeichnet, dass der Spannnagel aus Stahl ist und ein Elastizitatsmodul von 150 000 bis 250000 N/m² aufweist, zu gespitzt ist sowie Rippen (1) quer zur Längsrichtung des Spannnagel und eine Aufnahmevorrichtung (2) aufweist.

## Beschreibung

Die Erfindung betrifft einen Spannnagel.

Spannnägel sind bekannt, um über eine Schlaufe Vorrichtungen, wie ein Zelt, an ihnen zu befestigen, wobei der Spannnagel in den Untergrund gerammt werden muss, um Halt zu finden und befestigt zu sein. Ein Problem ist, dass der Untergrund oft von einem herkömmlichen Spannnagel nicht durchdrungen werden kann, da der Untergrund zu steinig oder gar felsig ist, und sich der Spannnagel daher verbiegt und krumm wird, so dass er nicht mehr zu benutzen ist.

Es besteht daher die Aufgabe, den Stand der Technik zu verbessern und insbesondere einen Spannnagel zur Verfügung zu stellen, der sich auch in steinigen bis felsigen Untergrund rammen läßt.

Gegenstand der Erfindung ist ein Spannnagel, der aus Stahl ist und ein Elastizitätsmodul von vorzugsweise 150 000 bis 250000 N/m², bevorzugt 180000 bis 230000 N/m² besonders bevorzugt 200000 bis 210000 N/m² aufweist, zu gespitzt ist sowie Rippen quer zur Längsrichtung das Spannnagels und eine Aufnahmevorrichtung aufweist. Beim Stahl handelt es sich vorzugsweise um handelsübliches Bewehrungsstahl.

Der erfindungsgemäße Spannnagel weist Rippen mit vorzugsweise einer Höne von 2 bis 7%, bevorzugt 3 bis 6% und besonders bevorzugt 4,5 bis 5 % und einen Abstand von vorzugsweise 40 bis 80 %, bevorzugt 50 bis 70% und besonders bevorzugt 55 bis 65 % ganz besonders bevorzugt 55 bis 60 %des Stabdurchmessers auf.

Vorzugsweise sind beim erfindungsgemäßen Spannnagel die Rippen als Schrägrippen angeordnet. Die Rippen könne in einer bevorzugten Ausführungsform gewindeartig angeordnet sind.

Der erfindungsgemäße Spannnagel weist vorzugsweise einen Durchmesser von 6, 8, 10, 12, 14, 16, 20, 25, 28, 32, 40 und 50 mm auf.

Der erfindungsgenäße Spannnagel weist als Aufnahmevorrichtung vorzugsweise eine Aufnahmevorrichtung in Form eines Stabes quer zur Längsrichtung des Spannnagels auf, also im rechten Winkel zum Spannnagel, so dass ein T mit dem Spannnagel gebildet wird, der bevorzugt im oberen Teil des Spannnagel befestigt ist, so dass darin beispielsweise eine Schlaufe zun Abspannen und Befestigen eines Zeltes befestigt werden kann.

Eine weitere bevorzugte Aufnahmevorrichtung ist ein Hohlzylinder, der parallel längs zum Spannnagel befestigt ist und vorzugsweise noch eine Vorrichtung aufweist, um z.B. einen Stab, wie einen Stab mit Sonnenschirm oder einen Fahnenmast im Hohlzylinder fest zu klemmen, wie eine Feststellschraube.

### Figuren

Figur 1

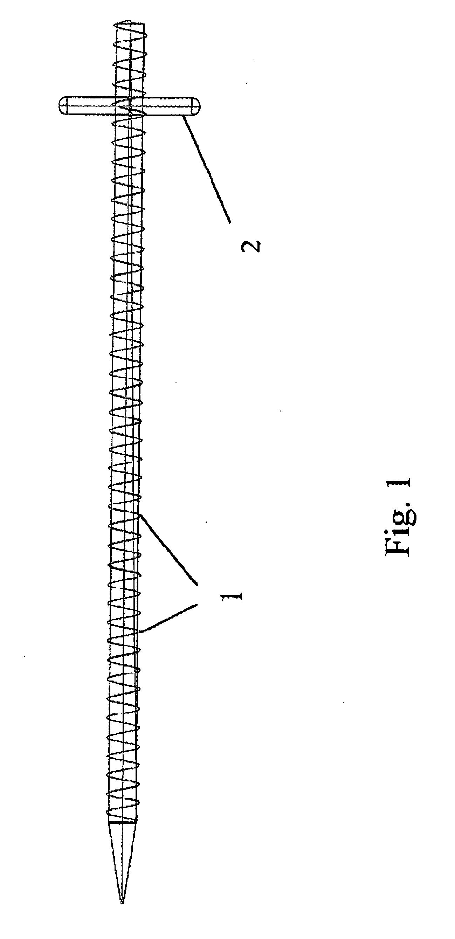

   Figur 1 zeigt einen Spannnagel mit Rillen 1 und einer T-förmigen Aufnahmevorrichtung 2 im oberen Teil.
Figur 2

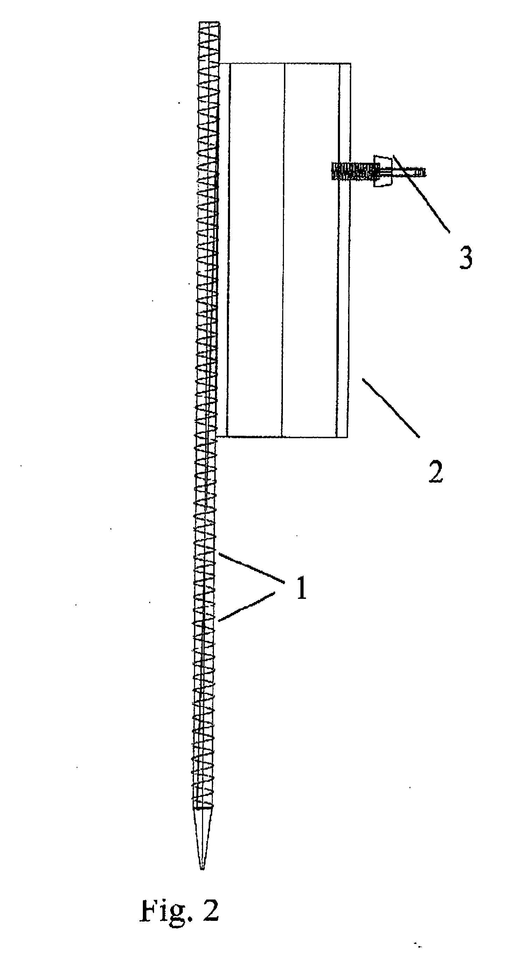

   Figur 2 zeigt einen Spannnagel mit Rillen 1 und einer zylinderförmigen Aufnahmevorrichtung 2 sowie einer Feststellschraube 3 auf.

## Patentansprüche

1. Spannnagel, **dadurch gekennzeichnet, dass** der Spannnagel aus Stahl ist und ein Elastizitätsmodul von 150 000 bis 250000 N/m² aufweist, zu gespitzt ist sowie Rippen quer zur Längsrichtung des Spannnagel und eine Aufnahmevorrichtung aufweist.

2. Spannnagel nach Anspruch 1, **dadurch gekennzeichnet, dass** es sich bei dem Stahl um Bewehrungsstahl handelt.

3. Spannnagel nach Anspruch 1 oder 2, **dadurch gekennzeichnet, dass** die Rippen eine Höhe von 2 bis 7% und eine Abstand von vorzugsweise 40 bis 80 % des Stabdurchmessers aufweisen.

4. Spannnagel nach Anspruch 3, **dadurch gekennzeichnet, dass** die Rippen als Schrägrippen angeordnet sind.

5. Spannnagel nach Anspruch 3 oder 4, **dadurch gekennzeichnet, dass** die Rippen gewindeartig angeordnet sind.

6. Spannnagel nach einem oder mehreren der Ansprüche 1 bis 5,
**dadurch gekennzeichnet, dass** der Spannnagel einen Durchmesser von 6, 8, 10, 12, 14, 16, 20, 25, 28, 32, 40 und 50 mm aufweist.

7. Spannnagel nach einem oder mehreren der Ansprüche 1 bis 6,
**dadurch gekennzeichnet, dass** die Aufnahmevorrichtung in Form eines Stabes quer zur Längsrichtung des Spannnagel befestigt ist.

8. Spannnagel nach einem oder mehreren der Ansprüche 1 bis 7,
**dadurch gekennzeichnet, dass** die Aufnahmevorrichtung längs in Form eines Hohlzylinders an dem Spannnagel befestigt ist.
